# EUROPÄISCHE PATENTSCHRIFT

(11) **EP 3 350 256 B1**
(45) Veröffentlichungstag und Bekanntmachung des Hinweises auf die Patenterteilung: **04.10.2023**
(21) Anmeldenummer: 15816114.1
(22) Anmeldetag: 10.12.2015
(51) Int. Cl.: C08K 5/20, C10M 161/00, B65D 41/04

(54) **GLEITMITTELSYSTEM**
LUBRICANT SYSTEM
SYSTÈME À LUBRIFIANT

(43) Veröffentlichungstag der Anmeldung: 25.07.2018
(73) Patentinhaber: Actega DS GmbH, 28219 Bremen (DE)
(72) Erfinder: BAHRS, Katharina, 28209 Bremen (DE)
(74) Vertreter: Maiwald, Walter
(86) Internationale Anmeldenummer: PCT/EP2015/079296
(87) Internationale Veröffentlichungsnummer: WO 2017/097364

(56) Entgegenhaltungen:
- EP-A1- 0 926 215
- US-A1- 2015 005 211
- DATABASE WPI Week 197324 Thomson Scientific, London, GB; AN 1973-34875U XP002760407, -& JP S48 13935 B1 (GULF RES & DEV CO) 1. Mai 1973 (1973-05-01)

## Beschreibung

Die Erfindung betrifft das Gebiet der Dichtungseinlagen für Gefäßverschlüsse für Gefäße, die zur Aufnahme von Lebensmitteln, Getränken und dergleichen dienen.

Es ist seit langem bekannt, Gefäße für Lebensmittel, Getränke und dergleichen mit Verschlüssen zu versehen, die einen sicheren (Wieder-)Verschluss gewährleisten. Die Gefäße bestehen oft aus Glas oder Kunststoff, in Form von Flaschen oder Gläsern mit einer Öffnung oder Mündung, die der Befüllung wie auch der Entnahme des Inhalts dient. Der Verschluss muss dann dichtend im Mündungsbereich anliegen, damit der Inhalt wirksam geschützt ist.

Im einfachsten Fall besteht der Verschluss aus einem passend geformten Stück Kunststoff, beispielsweise in Form einer Schraubkappe. Die Kappe muss dann nicht nur die Öffnung überdecken und verschließen, sondern muss auch die nötige Dichtung in dem Bereich bereitstellen, wo sie das Gefäß im Öffnungsbereich kontaktiert.

Da solche Gefäße industriell in großen Stückzahlen gefertigt werden, kommt es zu relevanten Fertigungstoleranzen; zudem ist der Gefäßrand, der die Öffnung umgibt, oft rau und sogar rissig. Das Material, aus dem der Verschluss besteht, ist oft für diese Dichtungsfunktion nicht optimiert. Ein optimiertes Dichtungsmaterial braucht eine Kombination von Weichheit und Elastizität, die solche Mängel des Gefäßrands ausgleichen kann.

Es ist daher auch seit langem bekannt, Gefäßverschlüsse mit einer Dichtungseinlage zu versehen, die aus einem anderen Material besteht als der Verschluss. Dies ermöglicht eine Optimierung der Dichtwirkung, unabhängig vom Material des Verschlusses. Von besonderer Bedeutung ist dies bei metallenen Verschlüssen (aus Stahlblech, Aluminium oder dgl.), die ohne eine solche Dichtungseinlage nicht brauchbar wären. Die Optimierung ist natürlich auch für Verschlüsse aus Kunststoff sehr sinnvoll.

Solche bekannten Dichtungseinlagen bestehen oft aus Polymercompounds, also Gemischen von wenigstens einem, oft mehreren Polymeren mit Hilfsstoffen wie Stabilisatoren, Antioxidantien, Farb- und Füllstoffen und dgl. ("Polymercompound" ist im Kontext dieser Patentanmeldung synonym mit "Compound"). Seit langem bekannt sind Compounds für Dichtungseinlagen auf Basis halogenierter Polymere, insbes. PVC. Diese werden oft als Plastisole bereitgestellt, die in flüssiger Form in einen Verschluss-Rohling eingebracht und dann durch Trocknung in die Form der gewünschten Dichtung gebracht werden. In ähnlicher Weise können Dichtungseinlagen aus flüssigen vernetzenden Polymercompounds hergestellt werden, die statt PVC z. B. Polyurethane enthalten.

In neuerer Zeit werden stattdessen Dichtungseinlagen aus Polymercompounds hergestellt, die keine halogenierten Polymere enthalten und stattdessen auf thermoplastischen Polymeren basieren. Solche Dichtungseinlagen werden oft erzeugt, indem das Compound durch Erwärmung fließfähig gemacht und in den Verschluss-Rohling eingetragen wird. Es wird dann durch Stempelung oder dgl. in die gewünschte Form gebracht, die es nach Erkalten beibehält. Alternativ kann die Dichtungseinlage als einlegbare Scheibe ausgebildet werden.

Getränke und Lebensmittel werden oft in Gefäßen verpackt, die mit Drehverschlüssen verschlossen werden. Solche Gefäße sind u. a. Flaschen mit Schraubkappen, z. B. für Mineralwasser und andere Erfrischungsgetränke; Weithalsgläser mit Nockendrehverschlüssen, z. B. für Joghurt; Gläser für Babynahrung, mit PT-Kappen (auch bekannt als "Press-on, Twist-off"-Kappen). Zum Öffnen solcher Gefäße wird der Verschluss relativ zum Gefäß verdreht, und dabei durch Eingriff von Gewindeelementen an Gefäß (meist Außengewinde) und Verschluss (meist Innengewinde) vom Gefäßrand abgehoben. Bei bestimmten Füllgütern besteht im verschlossenen Gefäß ein Vakuum; dieses wird beim Abheben des Verschlusses aufgehoben.

Ein solcher Drehverschluss kann daher nur gegen einen gewissen Widerstand geöffnet werden, der sich im Wesentlichen aus der Reibung der Dichtungseinlage auf dem Gefäßrand und bei Vakuumverschlüssen aus der Anpressung des Verschlusses gegen den Gefäßrand aufgrund des Vakuums im Gefäß ergibt.

Um die Öffnung solcher Gefäße, bei gegebener Dichtigkeit und auch bei Evakuierung des Gefäßes, durch Drehen des Verschlusses ohne übermäßigen Kraftauswand zu ermöglichen, werden seit langem Substanzen eingesetzt, die die Reibung verringern und dadurch als Gleitmittel wirken.

Gleitmittel werden industriell auch für andere Anwendungen eingesetzt. Beispielsweise werden Gleitmittel in großem Umfang bei der Produktion von Polymerfilmen verwendet, um den Reibungskoeffizienten beim Transport der Filme über Rollensysteme zu verringern und das Blocken beim Aufrollen der Filme zu verhindern. Das Gleitmittel wird dem Polymermaterial zugesetzt; nach gängiger Theorie migriert es dann an die Oberfläche des Films, also an seinen Wirkungsort.

Bekannte Gleitmittel umfassen primäre unverzweigte Fettsäureamide, die ungesättigt (z. B. Erucamid, Oleamid (Ölsäureamid) oder gesättigt (z. B. Behenamid, Stearamid) sein können. Für spezielle Anwendungen bei Filmen werden auch sekundäre Fettsäureamide (z. B. Stearyl-Erucamid) und gesättigte Bis-Amide wie Ethylen-bis-stearamid verwendet.

Für Dichtungseinlagen von Gefäßverschlüssen der vorstehend genannten Art wird häufig Erucamid (Docosenamid) als Gleitmittel verwendet. Erucamid ist eine ungesättigte Verbindung, die photochemisch und oxidativ angreifbar ist. Dies kann zu Stabilitätsproblemen führen, und stört bei der - z. B. in den USA für Wasser vorgeschriebenen - Ozonsterilisierung.

In US 6, 846, 863 ist vorgeschlagen worden, dem Polyethylen-Material einer Flaschen-Schraubkappe Behenamid zuzusetzen, um die Reibung der Schraubkappe an der Flaschenmündung zu verringern. Hier geht es nicht um Schraubkappen, die mit einer Dichtungseinlage versehen sind. Die Dichtung beruht auf dem unmittelbaren Kontakt des Kappenmaterials mit dem Glasrand der Flaschenmündung. Auch geht es hier nicht um evakuierte Gefäße; die Anforderungen an die Dichtung sind relativ anspruchslos.

Aus DE 11 2004 000 367 ist es bekannt, ein Verschlussdichtungsmaterial mit einem Gleitmittelsystem auszustatten, das statt Erucamid Silikonöl sowie Gleithilfsmittel enthält, die aus primären gesättigten unverzweigten Fettsäureamiden oder auch oxidiertem Polyethylenwachs zusammengesetzt sind. Vorzugsweise handelt es sich bei den Fettsäureamiden um Behenamid, Arachidamid, Stearamid, Palmitamid, Myristamid oder Lauramid. Die Anmeldung lehrt, dass für jedes Polymersystem eine individuelle Anpassung des Gleitmittelpakets erfolgen muss.

Aus US 2015/005211A1, die speziell die Entformung von Formteilen betrifft, ist eine Verschlusskappe aus HDPE bekannt, die keine Dichtungseinlage aufweist. Ein Gleitmittel wird unmittelbar dem HDPE zugesetzt. Isostearamid ist bei diesem Einsatz gleichwertig mit Behenamid.

Aus JP S48 13935 B1 sind "slip agents" für das Aufrollen von PE-Filmen bekannt, die keine Dichtungseinlagen sind.

Aus EP 0926 215 A1 sind Dichtungseinlagen für Gefässverschlüsse bekannt, die als Gleitmittel Ölsäureamid oder Erucamid enthalten.

Die Wirkung von Gleitmitteln ist keinesfalls unabhängig von der Anwendung. Ein Gleitmittel, das sich für die Produktion von Polymerfilmen gut eignet, kann für Dichtungseinlagen weniger geeignet sein. Beispielsweise ist Erucamid ein sehr geeignetes Gleitmittel für Dichtungseinlagen; Behenamid eignet sich für Dichtungseinlagen weniger.

Man kann daher aus der Eignung eines Gleitmittels für Filme nicht ableiten, dass dieses Gleitmittel sich ebenso gut für Dichtungseinlagen eignet.

Vor diesem Hintergrund ist es eine Aufgabe der Erfindung, Dichtungseinlagen für solche Gefäßverschlüsse vorzuschlagen, die zum Verschluss von Gefäßen zur Aufnahme von Lebensmitteln und Getränken dienen, wobei die Dichtungseinlage ein neuartiges Gleitmittel umfasst.

Eine weitere Aufgabe der Erfindung liegt darin, solch ein Gleitmittel vorzuschlagen, das hinsichtlich seiner Eignung mit Gleitmitteln auf Basis primärer gesättigter unverzweigter Fettsäureamide, insbesondere Ölsäure- und Erucamid, vergleichbar oder sogar überlegen ist.

Eine weitere Aufgabe liegt in der Bereitstellung einer Dichtungseinlage der genannten Art, mit einem Gleitmittel, das gegenüber photochemischer und oxidativer Degradation stabiler ist als primäre ungesättigte Fettsäureamide wie etwa Erucamid oder Ölsäureamid.

Zur Lösung dieser Aufgabe dienen erfindungsgemäß die Merkmalskombinationen der unabhängigen Patentansprüche. Vorteilhafte Ausgestaltungen der Erfindung sind in den Unteransprüchen definiert.

Erfindungsgemäß enthält das Gleitmittelsystem wenigstens ein verzweigtes primäres Fettsäureamid, welches der allgemeinen Formel R - CO - NH₂ entspricht und wobei R eine gesättigte verzweigte Kohlenwasserstoffkette mit 9 bis 27 C-Atomen ist.

In bevorzugten Ausführungsformen besteht das Gleitmittel zu mehr als 50 Gew.%, mehr bevorzugt zu mehr als 70 Gew.%, noch mehr bevorzugt zu mehr als 80 Gew. %, spezieller zu mehr als 90 Gew. % und besonders bevorzugt zu mehr als 95 Gew. % aus einem oder mehreren verzweigten primären Fettsäureamid(en).

Da die ungesättigten verzweigten primären Fettsäureamide nicht lichtstabil sind und oxidativ abgebaut werden können, und auch da sie - jedenfalls zur Zeit - nicht in industriellen Mengen zu erträglichen Kosten erhältlich sind, enthält das Gleitmittel wenigstens ein gesättigtes verzweigtes primäres Fettsäureamid, insbesondere Isooctadecanamid. Der Gehalt an solchen Amiden im Gleitmittel beträgt vorzugsweise mindestens 10 Gew.%, bezogen auf die Gesamtmenge von Gleitmittel im Polymercompound, aus dem die Dichtungseinlage gebildet wird. Mehr bevorzugt beträgt der Gehalt mindestens 70 Gew.%, besonders bevorzugt mindestens 90 Gew.%. In bestimmten, sehr bevorzugten Ausführungsformen besteht das Gleitmittel zu wenigstens 95 Gew. % oder sogar ganz aus einem oder mehreren gesättigten verzweigten primären Fettsäureamid(en).

Gesättigte verzweigte primäre Fettsäureamide der erfindungsgemäßen Art sind im Handel erhältlich, z. B. von CRODA, Hull, GB.

In WO 2010/149952 ist die Herstellung solcher Fettsäureamide offenbart. Dort wird auch angegeben, dass sich diese Fettsäureamide als Gleitmittel für Polymerfilme und als Entformungsmittel eignen. Im Ausführungsbeispiel 5 wird eine HDPE-Schraubkappe beschrieben, deren Material ein solches Fettsäureamid (ein industrielles Produkt mit einem überwiegenden Gehalt an Isooctadecanamid) zugesetzt wurde. Dies ist vergleichbar mit dem Vorschlag aus der schon genannten US 6,846,863. Im Vergleich mit einem entsprechenden Zusatz von Behenamid zeigt sich, innerhalb der Fehlergrenzen, allenfalls eine geringfügige Verbesserung beim Drehwiderstand. Es ist nicht offenbart, wie ein entsprechender Vergleich von Isooctadecanamid mit n-Stearamid ausgefallen wäre.

Das im Handel erhältliche und in WO 2010/149952 beschriebene Produkt enthält überwiegend Isooctadecanamid. Schon dieses Produkt ist ein Substanzgemisch, das hauptsächlich monoalkyl-substituierte KW-Ketten, aber in geringerem Umfang auch polyalkyl-substituierte KW-Ketten enthält. Die Seitenketten können an verschiedenen Stellen der Hauptkette abzweigen. Geringe Gehalte an Fettsäureamiden mit weniger oder mehr als 18 C-Atomen können vorhanden sein. Zudem können geringe Gehalte an ungesättigten und unverzweigten Fettsäureamiden enthalten sein.

Unter "Isooctadecanamid" wird daher im Kontext dieser Erfindung nicht zwangsläufig eine chemisch einheitliche Verbindung mit definierter Substitution verstanden. Gleiches gilt für andere ggf. erwähnte Fettsäureamide. "Isooctadecanamid" kann also auch für Substanzgemische stehen, solange der Hauptbestandteil des Gemisches durch die Bezeichnung richtig angegeben ist.

Erfindungsgemäss enthält die erfindungsgemäße Dichtungseinlage also wenigstens ein Fettsäureamid der allgemeinen Formel

R - CO - NH₂

wobei R eine gesättigte verzweigte Kohlenwasserstoffkette mit 9 bis 27 C-Atomen ist. Mehr bevorzugt ist R eine gesättigte verzweigte Kohlenwasserstoffkette mit 11 bis 23 C-Atomen, speziell mit 13 bis 23 C-Atomen, bevorzugt mit 15 bis 21 C-Atomen und besonders bevorzugt mit 17 bis 21 C-Atomen ist. Die Seitenkette ist speziell eine Methyl-, Ethyl-oder Propyl-Gruppe, vorzugsweise eine Methylgruppe.

In bevorzugten Ausführungsformen weisen wenigstens 40 Gew.%, speziell wenigstens 50 Gew.%, bevorzugt wenigstens 60 Gew.%, mehr bevorzugt wenigstens 70 Gew.%, noch mehr bevorzugt wenigstens 75 Gew.% und besonders bevorzugt wenigstens 80 Gew.% der Fettsäureamidmoleküle eine Monoalkyl-Seitenkette auf, wobei nicht mehr als 20 Gew.%, vorzugsweise nicht mehr als 15 Gew.% und besonders bevorzugt nicht mehr als 10 Gew.% der Fettsäureamidmoleküle eine Polyalkyl-Seitenkette aufweisen.

Das Fettsäureamid trägt die Seitenkette vorzugsweise etwa auf der halben Länge der Kohlenwasserstoff-Hauptkette.

Die Erfindung ist nicht auf Alkyl-Seitenketten beschränkt. Statt Alkylgruppen können auch andere Substituenten vorgesehen sein, die vorzugsweise vergleichbar unpolar sind wie Alkyl. Beispielsweise könnte statt einer Alkylgruppe eine Cycloalkylgruppe vorgesehen werden.

Es ist zudem denkbar, dass die Kohlenwasserstoff-Hauptkette selbst einen aliphatischen Ring umfasst.

Grundsätzlich kann also das erfindungsgemäße Gleitmittelsystem ein primäres Fettsäureamid umfassen, das statt einer Verzweigung im herkömmlichen Sinn eine Substitution an der Hauptkette aufweist, die ein vergleichbares Verhalten als Gleitmittel bewirkt wie eine herkömmliche Verzweigung. Eine solche Substitution ist dann eine Verzweigung im Sinne der Erfindung.

Das Gleitmittel ist bevorzugt weitgehend oder ganz frei von ungesättigten Verbindungen und hat eine Jodzahl von maximal 2.8 g Jod/100 g Gleitmittel, vorzugsweise von maximal 2.5 g Jod/100 g Gleitmittel, mehr bevorzugt von maximal 2.1 g Jod/100 g Gleitmittel und besonders bevorzugt von maximal 1.8 g Jod/100 g Gleitmittel. Die Jodzahl kann gemäß DIN 53241-1:1995-05 bestimmt werden.

Besonders bevorzugt umfasst das Gleitmittel Isooctadecanamid. In bestimmten bevorzugten Ausführungsformen besteht das Gleitmittel überwiegend oder vollständig aus Isooctadecanamid

Das Polymercompound umfasst vorzugsweise wenigstens ein Polyolefin.

In bevorzugten Ausführungsformen ist dieses Polyolefin aus der Gruppe ausgewählt, die Polyethylen, Polypropylen und deren Copolymere umfasst.

Wenn das wenigstens eine Polyolefin ein Polyethylen ist, dann ist dieses bevorzugt aus der Gruppe ausgewählt, die VLDPE, LLDPE, LDPE, HDPE und die PE-Copolymere EVA, EBA und EMA umfasst.

In bestimmten Ausführungsformen ist das wenigstens eine Polyolefin ein Polypropylen und aus der Gruppe ausgewählt, die homo-PP und co-PP umfasst.

Bei den genannten und auch bei anderen Ausführungsformen kann das Polymercompound wenigstens ein thermoplastisches Elastomer umfassen.

Bei diesen Ausführungsformen ist das thermoplastische Elastomer oft vorteilhaft ein TPE-O, ein TPE-V, ein TPE-U, ein TPE-E, ein TPE-S oder ein TPE-A.

Vorteilhaft kann das Polymercompound wenigstens ein TPE-O umfassen, welches ein random-Copolymer von Ethylen und einem anderen Alken, insbesondere einem C3-C8 - Alken ist, wobei das andere Alken vorzugsweise Octen ist.

Es kann auch vorteilhaft sein, dass das TPE-O wenigstens ein Block-Copolymer auf Basis von Polyethylen und einem C3 - C8 - Alken umfasst, wobei das C3-C8 - Alken vorzugsweise Octen ist.

Zusätzlich oder stattdessen kann das Compound als TPE-O wenigstens eine Polymerlegierung wie zum Beispiel eine PP-EPDM - Legierung und/oder Butylkautschuk umfassen.

Stattdessen oder zusätzlich kann das Compound als TPE-V ein, gegebenenfalls vernetztes, Polyurethan umfassen.

In diesen oder anderen Ausführungsformen kann es vorteilhaft sein, dass das Compound als TPE-E einen thermoplastischen (co-)Polyester umfasst.

Wichtige Ausführungsformen zeichnen sich dadurch aus, dass das Compound als TPE-S wenigstens ein Styrol-Blockcopolymer umfasst.

Bei solchen Ausführungsformen ist es oft von Vorteil, wenn das Styrol-Blockcopolymer aus der Gruppe ausgewählt ist, die SBS, SEBS, SEPS, SEEPS, und SIBS umfasst.

Bei den vorgenannten Dichtungseinlagen wird das Gleitmittel dem Compound vor dessen Verarbeitung zur Dichtungseinlage zugefügt, insbesondere bei der Mischung der Bestandteile des Compounds im Extruder.

Die Erfindung betrifft jedoch nicht nur die oben genannten, meist halogenfreien Compounds bzw. die aus diesen geformten Dichtungseinlagen. Sie eignet sich auch für Dichtungseinlagen, bei denen das Polymercompound ein halogenhaltiges Polymer, insbesondere PVC, enthält. Solche Compounds werden herkömmlich als Plastisole verarbeitet. Das Gleitmittel wird dann in das Materialgemisch eingebracht, das zum Plastisol verarbeitet wird, oder dem Plastisol zugesetzt.

Eine wichtige Verwendung einer erfindungsgemäßen Dichtungseinlage liegt in der Ausstattung von Drehverschlüssen. Die Dichtungseinlage verringert den Drehwiderstand des Drehverschlusses sowohl beim Verschließen als auch beim Öffnen der Flasche.

Bevorzugte Verwendungen der Dichtungseinlage ergeben sich, wenn der Drehverschluss eine Plastik-Gewindekappe, oder ein Aluminiumverschluss, ein Twist-Kronenkorken oder auch Vakuumverschlüsse wie ein Nockendrehverschluss oder eine PT-Kappe ist.

Die Dichtungseinlage wird in bekannter Weise als Plastisol oder in thermisch fließfähig gemachter Form in den Verschluss-Rohling eingebracht. Sie kann im Verschluss-Rohling mittels in-shell - molding ausgebildet wird.

Alternativ kann die Dichtungseinlage, ebenfalls in an sich bekannter Weise, als Scheibe oder Ring vorgefertigt und dann in den Verschluss eingelegt werden.

Die Erfindung bietet erhebliche und zum Teil unerwartete Vorteile.

Zum einen ist es erheblich kostengünstiger, das Gleitmittel in die Dichtungseinlage einzuarbeiten, anstatt es dem Material zuzumischen, aus dem der Verschluss besteht. Die Dichtungseinlage wiegt wesentlich weniger als der Verschluss; meist beträgt ihr Gewicht nur wenige Prozent vom Gesamtgewicht des Verschlusses. Da der Relativgehalt an Gleitmittel in Dichtungseinlage und Verschluss etwa gleich sein muss, um die gewünschte Wirkung zu erzielen, braucht man also nur eine entsprechend niedrigere Menge an Gleitmittel, wenn dieses nicht dem Verschlussmaterial, sondern der Dichtungseinlage zugesetzt wird.

Zum anderen ist das erfindungsgemäß verwendete Gleitmittel beim Einsatz in der Dichtungseinlage sehr viel wirksamer, als man aufgrund der Angaben im Stand der Technik erwarten würde.

Aus der schon genannten WO 2010/149952 (Beispiel 5) ist bekannt, dass Isooctadecanamid beim Einsatz als Bestandteil des Verschlussmaterials praktisch die gleiche Wirkung zeigt wie Behenamid. Das ist beim Einsatz als Bestandteil einer Dichtungseinlage ganz anders. Wie nachstehend noch näher beschrieben werden wird, ist Isooctadecanamid als Gleitmittel in einer Dichtungseinlage um ein Vielfaches wirksamer als Behenamid und andere bekannte Gleitmittel. Die Wirksamkeit entspricht praktisch derjenigen von Olsäureamid, das in Dichtungseinlagen ein sehr viel wirksameres Gleitmittel ist als Behenamid. Damit erlaubt es die Erfindung, die Anfälligkeit von Ölsäureamid (und dem vergleichbaren Erucamid) für oxidative Degradation zu vermeiden, ohne eine verringerte Wirksamkeit in Kauf nehmen zu müssen.

Dieser Vorteil ist nach den bekannten Lehren, die das Gleitmittel in das Material des Gefäßverschlusses einbauen, nicht erhältlich und ist angesichts des Standes der Technik (z.B. WO 2010/149952) überraschend.

Die Erfindung wird im Folgenden anhand eines Vergleichsversuchs und einiger Ausführungsbeispiele näher erläutert.

### Vergleichsversuch

Für die Vergleichsversuche wurde ein Basiscompound bestehend aus 80% EVA (VA-Gehalt 9%, Dichte 0,92-0,93g/cm³) und 20% LDPE (Dichte 0,92-0,93 g/cm³)verwendet, das zur Herstellung der Proben 1 bis 13 mit verschiedenen Gleitmitteln in jeweils mehreren unterschiedlichen Dosierungen versehen wurde, wie in Tabelle 1 angegeben. Die Angabe des Gleitmittelgehalts ist in Gew. %, bezogen auf das Gesamtgewicht des Gleitmittel-haltigen Compounds.

**TABELLE 1**

| **Probe Nr.** | **Gleitmittel** | **Dosierung** |
|---|---|---|
| 1 | Ölsäureamid | 0,3% Gew.% |
| 2 | Stearamid | 0,3% Gew.% |
| 3 | Behenamid | 0,3% Gew.% |
| 4 | Ethylenbisstearamid | 0,3% Gew.% |
| 5 | Isooctadecanamid | 0,3% Gew.% |
| 6 | Stearamid | 0,5% Gew.% |
| 7 | Behenamid | 0,5% Gew.% |
| 8 | Ethylenbisstearamid | 0,5% Gew.% |
| 9 | Isooctadecanamid | 0,5% Gew.% |
| 10 | Stearamid | 0,7% Gew.% |
| 11 | Behenamid | 0,7% Gew.% |
| 12 | Ethylenbisstearamid | 0,7% Gew.% |
| 13 | Isooctadecanamid | 1,0% Gew.% |

| | | |
|---|---|---|
| Die verwendeten Gleitmittel waren: Ölsäureamid (Finawax O, FineOrganics) Stearamid (Finawax S90, FineOrganics) Behenamid (Crodamide BR, Croda) Ethylen-bis-stearamid (Crodamide EBS, Croda) Isooctadecanamid (Incroslip SL, Croda) | | |

Aus den so mit unterschiedlichen Gehalten verschiedener Gleitmittel ausgestatteten Compounds wurden Pressplatten von 0.7 mm Stärke hergestellt. Aus diesen Pressplatten wurden Scheiben von 26 mm Durchmesser ausgestanzt. Diese Scheiben wurden in Kunststoffschraubverschlüsse des Typs Poly Vent eingelegt. Je Compound wurden 10 Verschlüsse getestet.

Dafür wurden die Verschlüsse auf mit Wasser gefüllte PET-Rohlinge (PCO 1810) aufgesetzt und mittels einer halbautomatischen Labor-Verschließanlage des Typs DATZ SYM-HA mit voreingestellter Verschließkraft und -geschwindigkeit festgedreht.

Die Verschließkraft betrug 1.47 bis 1.58 N. m; die Verschließgeschwindigkeit lag bei 225 Umdrehungen pro Minute.

Die Verschlüsse wurden, nach 24 Stunden Lagerung bei Raumtemperatur, geöffnet. Dabei wurden die Öffnungswerte mittels eines Steinfurth Vibrac Torquo-Gerätes bestimmt: Hierzu wurden die Rohlinge in der Einspannvorrichtung fixiert. Die Antriebseinheit des Gerätes wurde auf dem Verschluss aufgesetzt und drehte den Verschluss auf, wobei das erforderliche Drehmoment ermittelt wurde. Die Genauigkeit der Messung lag bei ± 0.02 N· m.

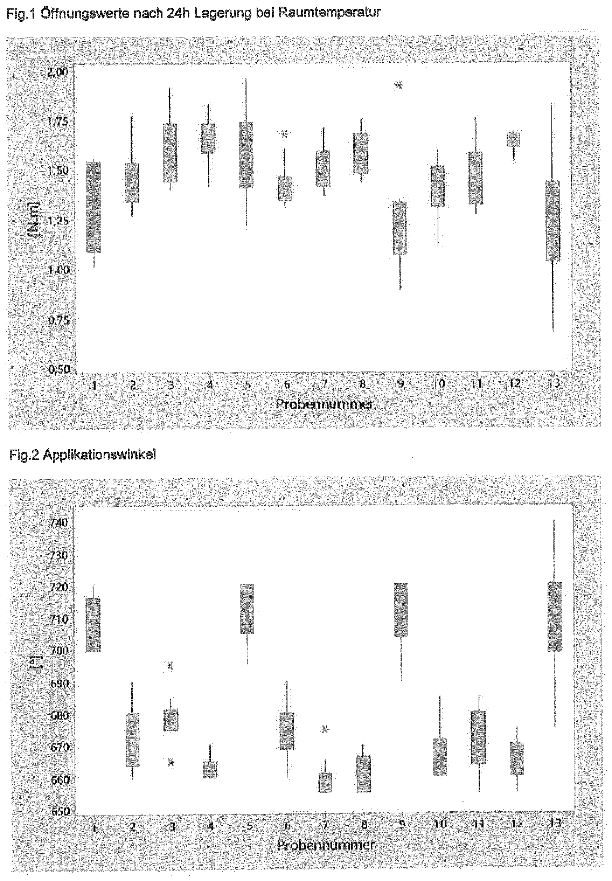

Die Ergebnisse sind in Fig. 1 wiedergegeben (Sternchen bezeichnen das Auftreten von "Ausreißern").

Der mit 0.3 Gew. % Ölsäureamid (Probe 1) erreichte Öffnungswert dient zum Vergleich. Das erfindungsgemäße Gleitmittel Isooctadecanamid (Probe 5) ist bei kleinen Gleitmittelgehalten (Proben 2 bis 5) etwa gleich gut wie Behenamid, bei leicht höheren Gehalten (Proben 6 bis 9 mit 0.5 Gew. %, Proben 10 bis 12 mit 0.7 Gew, %, Probe 13 mit 1 Gew. %) aber deutlich besser als alle anderen gesättigten Fettsäureamide und ebenso gut wie Ölsäureamid.

An den Materialien der Proben 1 bis 13 wurde der Applikationswinkel bestimmt, indem die Gewindeanfänge des Rohlings und des Verschlusses markiert wurden, die Markierungen vor dem Verschließen über einander positioniert wurden, und nach dem Verschließen der Winkel zwischen den Markierungen mit Hilfe einer Winkelschablone gemessen wurde.

Der Applikationswinkel besagt, wie weit ein Verschluss auf ein Gewinde gedreht werden kann. Er heißt auch Verschließwinkel, und ist ein Maß für die Abdichtung. Er sollte so groß wie möglich sein. Die Ergebnisse zeigt Figur 2.

Auch hier dient der Wert für die Probe 1 als Referenz. Mit Ölsäureamid als Gleitmittel erreicht man Applikationswinkel von oberhalb 700°. Nur mit Isooctadecanamid werden solche Werte erreicht, und dies auch schon bei 0.3 Gew. % an Gleitmittelgehalt, also bei gleicher Konzentration wie Ölsäureamid.

Zuletzt wurde untersucht, wie sich die Materialien der Proben 1 bis 13 hinsichtlich des Auftretens von Scuffing verhalten. Scuffing nennt man die Bildung von Abrieb.

Ölsäureamid ergibt bei 0.3 Gew. % (Probe 1) in diesem Versuch keinen Abrieb. Auch Isooctadecanamid ergibt bei 0.3 Gew. % (Probe 5) keinen Abrieb, und auch nicht bei höherer Konzentration (Proben 9 und 13). Alle anderen Gleitmittel (Proben 2 bis 4, 6 bis 8 und 10 bis 12) ergeben im Versuch starken Abrieb.

Die Versuche zeigen, dass nur Isooctadecanamid, ein erfindungsgemäßes Gleitmittel, mit Ölsäureamid vergleichbare Eigenschaften aufweist, und damit bekannten Gleitmitteln wie Behenamid und Stearamid deutlich und überraschend überlegen ist.

### Ausführungsbeispiele

Beispiel 1:
Compound für eine erfindungsgemäße Dichtungseinlage auf PVC-Plastisol-Basis

| | % |
|---|---|
| E-PVC | 11,4 |
| (Mikro)-S-PVC | 45,6 |
| Weichmacher ATBC | 31,3 |
| Füllstoff Bariumsulfat | 9 |
| NaHCO₃ | 1 |
| Silikonöl | 0,2 |
| Ca-Zn-Fettsäuresalz | 0,5 |
| Isooctadecanamid | 1 |

Beispiel 2:
Compound für eine erfindungsgemäße Dichtungseinlage auf TPE-S-Basis TPE-S

| | % |
|---|---|
| SBS (29,5% Styrol) | 30 |
| Weißöl (kinematische Viskosität bei 40°C 70 mm²s ASTM D445)) | 12,5 |
| Polyethylen-LD (Dichte 0.923 g/cm³) | 56,8 |
| Stabilisator | 0,2 |
| Isooctadecanamid | 0,5 |

Beispiel 3:
Compound für eine erfindungsgemäße Dichtungseinlage auf TPE-O-Basis TPE-O

| | % |
|---|---|
| Ethylen-Octen-block-Copolymer | 40 |
| Ethylen-Octen-random-Copolyer | 59,3 |
| Stabilisatoren | 0,2 |
| Isooctadecanamid | 0,5 |

## Patentansprüche

1. Dichtungseinlage für einen Gefäßverschluss eines Gefäßes zur Aufnahme von Lebensmitteln, Getränken und dergleichen, die ein Polymercompound umfasst, welches wenigstens ein Polymer und ein Gleitmittel enthält, wobei das Gleitmittel wenigstens ein verzweigtes primäres Fettsäureamid umfasst, welches der allgemeinen Formel
R - CO - NH₂
entspricht und wobei R eine gesättigte verzweigte Kohlenwasserstoffkette mit 9 bis 27 C-Atomen ist.

2. Dichtungseinlage nach Anspruch 1, wobei das Gleitmittel zu mindestens 10 Gew.%, vorzugsweise zu mindestens 70 Gew.% und besonders bevorzugt zu mindestens 90 Gew. % aus wenigstens einem gesättigten verzweigten primären Fettsäureamid besteht.

3. Dichtungseinlage nach Anspruch 1, wobei R eine gesättigte verzweigte Kohlenwasserstoffkette mit 11 bis 23 C-Atomen, speziell mit 13 bis 23 C-Atomen, bevorzugt mit 15 bis 21 C-Atomen und besonders bevorzugt mit 17 bis 21 C-Atomen ist.

4. Dichtungseinlage nach einem der Ansprüche 1 bis 3, wobei das verzweigte primäre Fettsäureamid als Seitenkette eine Methyl, Ethyl- oder Propyl-Gruppe, vorzugsweise eine Methylgruppe aufweist.

5. Dichtungseinlage nach einem der Ansprüche 1 bis 4, wobei wenigstens 40 Gew.%, speziell wenigstens 50 Gew.%, bevorzugt wenigstens 60 Gew.%, mehr bevorzugt wenigstens 70 Gew.%, noch mehr bevorzugt wenigstens 75 Gew.% und besonders bevorzugt wenigstens 80 Gew.% der Fettsäureamidmoleküle eine Monoalkyl-Seitenkette aufweisen.

6. Dichtungseinlage nach einem der Ansprüche 1 bis 5, wobei das wenigstens eine Fettsäureamid etwa auf der halben Länge der Kohlenwasserstoffkette eine Verzweigung aufweist.

7. Dichtungseinlage nach einem der Ansprüche 1 bis 6, wobei nicht mehr als 20 Gew.%, vorzugsweise nicht mehr als 15 Gew.% und besonders bevorzugt nicht mehr als 10 Gew.% der Fettsäureamidmoleküle eine Polyalkyl-Seitenkette aufweisen.

8. Dichtungseinlage nach einem der vorstehenden Anspnüche, wobei das Gleitmittel eine Jodzahl von maximal 2.8 g Jod/100 g Gleitmittel, vorzugsweise von maximal 2.5 g Jod/100 g Gleitmittel, mehr bevorzugt von maximal 2.1 g Jod/100 g Gleitmittel und besonders bevorzugt von maximal 1.8 g Jod/100g Gleitmittel aufweist.

9. Dichtungseinlage nach einem der vorstehenden Anspnüche, bei der das Gleitmittel Isooctadecanamid enthält.

10. Dichtungseinlage nach einem der vorstehenden Ansprüche, wobei das Polymercompound wenigstens ein Polyolefin umfasst.

11. Dichtungseinlage nach Anspruch 10, wobei wenigstens ein Polyolefin aus der Gruppe ausgewählt ist, die Polyethylen, Polypropylen und deren Copolymere umfasst.

12. Dichtungseinlage nach Anspruch 4, wobei wenigstens ein Polyolefin aus der Gruppe ausgewählt ist, die VLDPE, LLDPE, LDPE und HDPE und die PE-Copolymere EVA, EBA und EMA umfasst.

13. Dichtungseinlage nach Anspruch 11 oder 12, wobei wenigstens ein Polyolefin aus der Gruppe ausgewählt ist, die homo-PP und co-PP umfasst.

14. Dichtungseinlage nach einem der Ansprüche 1 bis 13, bei der das Polymercompound wenigstens ein thermoplastisches Elastomer umfasst.

15. Dichtungseinlage nach Anspruch 14, bei der das thermoplastische Elastomer ein TPE-O, ein TPE-V, ein TPE-U, ein TPE-E, ein TPE-S oder ein TPE-A ist.

16. Dichtungseinlage nach Anspruch 15, bei der das Polymercompound wenigstens ein random-Copolymer von Ethylen und einem anderen Alken, insbesondere einem C3-C8-Alken umfasst, wobei das andere Alken vorzugsweise Octen ist.

17. Dichtungseinlage nach Anspruch 15 oder 16, bei der das Polymercompound wenigstens ein Block-Copolymer auf Basis von Polyethylen und einem C3-C8-Alken umfasst, wobei das C3-C8-Alken vorzugsweise Octen ist.

18. Dichtungseinlage nach Anspruch 15, bei der das thermoplastische Elastomer ein, gegebenenfalls vernetztes, PP-EPDM oder Polyurethan ist.

19. Dichtungseinlage nach Anspruch 15, bei der das thermoplastische Elastomer ein thermoplastischer (co-)Polyester ist.

20. Dichtungseinlage nach Anspruch 15, bei der das thermoplastische Elastomer ein Styrol-Blockcopolymer ist.

21. Dichtungseinlage nach Anspruch 20, bei der das Styrol-Blockcopolymer aus der Gruppe ausgewählt ist, die SBS, SEBS, SEPS, SEEPS und SIBS umfasst.

22. Dichtungseinlage nach einem der Ansprüche 1 bis 21, bei der das Polymercompound wenigstens ein Polymer enthält, welches aus der Gruppe ausgewählt ist, die synthetische Kautschuke wie insbesondere Butylkautschuk umfasst.

23. Dichtungseinlage nach einem der Ansprüche 1 bis 9, bei der das Polymercompound ein halogenhaltiges Polymer, insbesondere PVC, enthält.

24. Verwendung einer Dichtungseinlage gemäß einem der Ansprüche 1 bis 23 für einen Drehverschluss.

25. Verwendung nach Anspruch 24, wobei der Drehverschluss ein Nockendrehverschluss, eine Plastik-Gewindekappe, ein Aluminiumverschluss, ein Twist-Kronenkorken oder ein Vakuumverschluss, insbesondere ein Nockendrehverschluss oder eine PT-Kappe ist.

26. Verwendung nach Anspruch 24 oder 25, wobei das Polymercompound als Plastisol oder in thermisch fließfähig gemachter Form in den Verschluss-Rohling eingebracht und dort die Dichtungseinlage ausgebildet wird.

27. Verwendung nach Anspruch 26, wobei die Dichtungseinlage im Verschluss-Rohling mittels in-shell-molding ausgebildet wird.

28. Verwendung nach Anspruch 24 oder 25, wobei die Dichtungseinlage als vorgefertigte Scheibe oder Ring in den Gefäßverschluss eingebracht wird.

## Claims

1. A sealing insert for a vessel closure of a vessel for accommodating food, beverages and the like, which comprises a polymer compound containing at least one polymer and a lubricant, wherein the lubricant comprises at least one branched primary fatty acid amide represented by the general formula
R - CO - NH₂
and wherein R is a saturated branched hydrocarbon chain having 9 to 27 C atoms.

2. The sealing insert according to claim 1, wherein the lubricant consists of at least 10% by weight, preferably at least 70% by weight and particularly preferably at least 90% by weight of at least one saturated branched primary fatty acid amide.

3. The sealing insert according to claim 1, wherein R is a saturated branched hydrocarbon chain having 11 to 23 C atoms, specifically having 13 to 23 C atoms, preferably having 15 to 21 C atoms and particularly preferably having 17 to 21 C atoms.

4. The sealing insert according to any one of claims 1 to 3, wherein the branched primary fatty acid amide has as side chain a methyl, ethyl or propyl group, preferably a methyl group.

5. The sealing insert according to any one of claims 1 to 4, wherein at least 40% by weight, specifically at least 50% by weight, preferably at least 60% by weight, more preferably at least 70% by weight, still more preferably at least 75% by weight, and particularly preferably at least 80% by weight of the fatty acid amide molecules have a monoalkyl side chain.

6. The sealing insert according to any one of claims 1 to 5, wherein the at least one fatty acid amide has a branching approximately halfway along the hydrocarbon chain.

7. The sealing insert according to any one of claims 1 to 6, wherein not more than 20% by weight, preferably not more than 15% by weight and particularly preferably not more than 10% by weight of the fatty acid amide molecules have a polyalkyl side chain.

8. The sealing insert according to any one of the preceding claims, wherein the lubricant has an iodine value of at most 2.8 g iodine/100 g lubricant, preferably of at most 2.5 g iodine/100 g lubricant, more preferably of at most 2.1 g iodine/100 g lubricant and particularly preferably of at most 1.8 g iodine/100 g lubricant.

9. The sealing insert according to any one of the preceding claims, in which the lubricant comprises isooctadecanamide.

10. The sealing insert according to any one of the preceding claims, wherein the polymer compound comprises at least one polyolefin.

11. The sealing insert according to claim 10, wherein at least one polyolefin is selected from the group consisting of polyethylene, polypropylene, and copolymers thereof.

12. The sealing insert according to claim 4, wherein at least one polyolefin is selected from the group comprising VLDPE, LLDPE, LDPE, and HDPE, and the PE copolymers EVA, EBA, and EMA.

13. The sealing insert according to claim 11 or 12, wherein at least one polyolefin is selected from the group comprising homo-PP and co-PP.

14. The sealing insert according to any one of claims 1 to 13, in which the polymer compound comprises at least one thermoplastic elastomer.

15. The sealing insert according to claim 14, in which the thermoplastic elastomer is a TPE-O, a TPE-V, a TPE-U, a TPE-E, a TPE-S, or a TPE-A.

16. The sealing insert according to claim 15, in which the polymer compound comprises at least one random copolymer of ethylene and another alkene, in particular a C3-C8-alkene, wherein the other alkene is preferably octene.

17. The sealing insert according to claim 15 or 16, in which the polymer compound comprises at least one block copolymer based on polyethylene and a C3-C8-alkene, wherein the C3-C8-alkene is preferably octene.

18. The sealing insert according to claim 15, in which the thermoplastic elastomer is a PP-EPDM or polyurethane, optionally crosslinked.

19. The sealing insert according to claim 15, in which the thermoplastic elastomer is a thermoplastic (co-)polyester.

20. The sealing insert according to claim 15, in which the thermoplastic elastomer is a styrene block copolymer.

21. The sealing insert according to claim 20, in which the styrene block copolymer is selected from the group comprising SBS, SEBS, SEPS, SEEPS and SIBS.

22. The sealing insert according to any one of claims 1 to 21, in which the polymer compound contains at least one polymer selected from the group comprising synthetic rubbers such as, in particular, butyl rubber.

23. The sealing insert according to any one of claims 1 to 9, in which the polymer compound comprises a halogen-containing polymer, in particular PVC.

24. A use of a sealing insert according to any one of claims 1 to 23 for a screw cap.

25. The use according to claim 24, wherein the screw cap is a cam-type screw cap, a plastic threaded cap, an aluminum cap, a twist-off crown cork or a vacuum closure, in particular a cam-type screw cap or a PT cap.

26. The use according to claim 24 or 25, wherein the polymer compound is introduced into the closure blank as plastisol or in thermally flowable form and the sealing insert is formed therein.

27. The use according to claim 26, wherein the sealing insert is formed in the closure blank by means of in-shell molding.

28. The use according to claim 24 or 25, wherein the sealing insert is inserted into the vessel closure as a prefabricated disc or ring.

## Revendications

1. Garniture d'étanchéité intérieure pour une fermeture de récipient d'un récipient destiné à recevoir des denrées alimentaires, des boissons et produits analogues, qui comprend un composé de polymère, lequel contient au moins un polymère et un lubrifiant, sachant que le lubrifiant comprend au moins un amide d'acide gras primaire ramifié, lequel correspond à la formule générale
R - CO - NH₂
et sachant que R est une chaîne d'hydrocarbures saturée ramifiée avec 9 à 27 atomes C.

2. Garniture d'étanchéité intérieure selon la revendication 1, sachant que le lubrifiant est composé d'au moins à 10 %/poids, de préférence au moins à 70 %/poids et en particulier de préférence à au moins 90 %/poids d'au moins un amide d'acide gras primaire saturé ramifié.

3. Garniture d'étanchéité intérieure selon la revendication 1, sachant que R est une chaîne d'hydrocarbures saturée ramifiée avec 11 à 23 atomes C, en particulier avec 13 à 23 atomes C, de préférence avec 15 à 21 atomes C et en particulier de préférence avec 17 à 21 atomes C.

4. Garniture d'étanchéité intérieure selon l'une quelconque des revendications 1 à 3, sachant que l'amide d'acide gras primaire ramifié comporte en tant que chaîne latérale un méthyle, un groupe éthyle ou propyle, de préférence un groupe méthyle.

5. Garniture d'étanchéité intérieure selon l'une quelconque des revendications 1 à 4, sachant qu'au moins 40 %/poids, en particulier au moins 50 %/poids, de préférence au moins 60 %/poids, de façon plus préférée au moins 70 %/poids, de façon encore plus préférée au moins 75 %/poids et en particulier de préférence au moins 80 %/poids des molécules d'amide d'acide gras comportent une chaîne latérale monoalkyle.

6. Garniture d'étanchéité intérieure selon l'une quelconque des revendications 1 à 5, sachant qu'au moins un amide d'acide gras comporte une ramification à peu près sur la moitié de la longueur de la chaîne d'hydrocarbures.

7. Garniture d'étanchéité intérieur selon l'une quelconque des revendications 1 à 6, sachant que pas plus de 20 %/poids, de préférence pas plus de 15 %/poids et en particulier de préférence pas plus de 10 %/poids des molécules d'amide d'acide gras comportent une chaîne latérale polyalkyle.

8. Garniture d'étanchéité intérieure selon l'une quelconque des revendications précédentes, sachant que le lubrifiant comporte un indice d'iode maximal de 2,8 g d'iode/100 g lubrifiant, de préférence un maximum de 2,5 g d'iode/100 g lubrifiant, de façon plus préférée un maximum de 2,1 g d'iode/100 g lubrifiant et en particulier de préférence un maximum de 1,8 g d'iode/100 g lubrifiant.

9. Garniture d'étanchéité intérieure selon l'une quelconque des revendications précédentes, pour laquelle le lubrifiant contient de l'isooctadécanamide.

10. Garniture d'étanchéité intérieure selon l'une quelconque des revendications précédentes, sachant que le composé de polymère comprend au moins une polyoléfine.

11. Garniture d'étanchéité intérieure selon la revendication 10, sachant qu'au moins une polyoléfine est choisie à partir du groupe qui comprend le polyéthylène, le propylène et les copolymères de ceux-ci .

12. Garniture d'étanchéité intérieure selon la revendication 4, sachant qu'au moins une polyoléfine est choisie à partir du groupe qui comprend le VLDPE, LLDPE, LDPE et HDPE et les copolymères de polyéthylène EVA, EBA et EMA.

13. Garniture d'étanchéité intérieure selon la revendication 11 ou 12, sachant qu'au moins une polyoléfine est choisie à partir du groupe, qui comprend l'homo-PP et le co-PP.

14. Garniture d'étanchéité intérieure selon l'une quelconque des revendications 1 à 13, pour laquelle le composé de polymère comprend au moins un élastomère thermoplastique.

15. Garniture d'étanchéité intérieure selon la revendication 14, pour laquelle l'élastomère thermoplastique est un TPE-O, un TPE-V, un TPE-U, un TPE-E, un TPE-S ou un TPE-A.

16. Garniture d'étanchéité intérieure selon la revendication 15, pour laquelle le composé de polymère comprend au moins un copolymère statistique d'éthylène et un autre alcène, en particulier un alcène C3-C8, sachant que l'autre alcène est de préférence un octène.

17. Garniture d'étanchéité intérieure selon la revendication 15 ou 16, pour laquelle le composé de polymère comprend un copolymère en masse à base de polyéthylène et un alcène C3-C8, sachant que l'alcène C3-C8 est de préférence un octène.

18. Garniture d'étanchéité intérieure selon la revendication 15, pour laquelle l'élastomère thermoplastique est un PP-EPDM le cas échéant réticulé ou un polyuréthane.

19. Garniture d'étanchéité intérieur selon la revendication 15, pour laquelle l'élastomère thermoplastique est un (co)-polyester thermoplastique.

20. Garniture d'étanchéité intérieure selon la revendication 15, pour laquelle l'élastomère thermoplastique est un copolymère séquencé de styrène.

21. Garniture d'étanchéité intérieure selon la revendication 20, pour laquelle le copolymère séquencé de styrène est choisi à partir du groupe qui comprend les SBS, SEBS, SEPS, SEEPS et SIBS.

22. Garniture d'étanchéité intérieure selon l'une quelconque des revendications 1 à 21, pour laquelle le composé de polymère contient au moins un polymère, lequel est choisi à partir du groupe qui comprend les caoutchoucs synthétiques, comme en particulier le caoutchouc butylique.

23. Garniture d'étanchéité intérieure selon l'une quelconque des revendications 1 à 9, pour laquelle le composé de polymère contient un polymère contenant un halogène, en particulier du polychlorure de vinyle (PCV).

24. Utilisation d'une garniture d'étanchéité intérieure selon l'une quelconque des revendications 1 à 23 pour une fermeture rotative.

25. Utilisation selon la revendication 24, sachant que la fermeture rotative est une fermeture rotative à bossages, une capsule filetée en plastique, une fermeture en aluminium, un bouchon-couronne tournant quart-de-tour ou une fermeture sous vide, en particulier une fermeture rotative à bossages ou une capsule de polythiophène (PT).

26. Utilisation selon la revendication 24 ou 25, sachant que le composé de polymère est incorporé dans l'ébauche de fermeture sous la forme de plastisol ou sous une forme rendue thermiquement fluide et la Garniture d'étanchéité intérieure y est constituée.

27. Utilisation selon la revendication 26, sachant que la Garniture d'étanchéité intérieure est constituée dans l'ébauche de fermeture au moyen d'un moulage en coquille.

28. Utilisation selon la revendication 24 ou 25, sachant que la Garniture d'étanchéité intérieure est incorporée dans la fermeture du récipient sous la forme d'un disque ou d'un anneau préfabriqué.
